# EUROPÄISCHE PATENTSCHRIFT

(11) **EP 1 117 950 B1**
(45) Veröffentlichungstag und Bekanntmachung des Hinweises auf die Patenterteilung: **17.09.2003**
(21) Anmeldenummer: 00965744.6
(22) Anmeldetag: 09.08.2000
(51) Int. Cl.: F16H 59/02

(54) **SCHALTVORRICHTUNG EINES AUTOMATISCHEN KRAFTFAHRZEUGGETRIEBES**
SELECTOR DEVICE FOR A VEHICLE WITH AN AUTOMATIC GEAR SYSTEM
DISPOSITIF DE COMMUTATION POUR BOITE AUTOMATIQUE D'UN VEHICULE A MOTEUR

(30) Priorität: 10.08.1999 DE 19937698
(43) Veröffentlichungstag der Anmeldung: 25.07.2001
(73) Patentinhaber: ZF Lemförder Metallwaren AG, 49441 Lemförde (DE)
(72) Erfinder: GIEFER, Andreas, 49448 Lemförde (DE)
(86) Internationale Anmeldenummer: DE0002715
(87) Internationale Veröffentlichungsnummer: WO01011270

(56) Entgegenhaltungen:
- EP-A- 0 770 799
- WO-A-00/30885
- DE-A- 19 526 059
- DE-A- 19 610 766
- DE-A- 19 633 948
- DE-A- 19 756 034

## Beschreibung

Die Erfindung betrifft eine Schaltvorrichtung eines automatischen Kraftfahrzeuggetriebes gemäß dem Oberbegriff des Anspruchs 1.

Aus der Deutschen Offenlegungsschrift DE 195 26 059 A1 ist eine solche Schaltvorrichtung eines automatischen Kraftfahrzeuggetriebes bekannt, wobei ein Wählhebel und eine Kinematik zur Übertragung der Wählbewegungen auf das Automatikgetriebe vorgesehen sind, und wobei sich der Wählhebel zur Anwahl von Automatikgetriebestufen in einer Automatikschaltgasse und zum manuellen Auf- und Abwärtsschalten von Getriebestufen in einer Sequenzschaltgasse bewegen kann. Die Schaltvorrichtung ist dabei derart ausgeführt, daß in Fahrtrichtung gesehen rechts die Automatikschaltgasse angelegt ist und sich links davon die Sequenzschaltgasse befindet. Die gezeigte Ausführung der Schaltvorrichtung ist hierbei für ein linksgelenktes Fahrzeug ausgelegt. Soll eine entsprechende Schaltvorrichtung in ein rechtsgelenktes Fahrzeug eingebaut werden, so muß aus ergonomischen Gründen die Automatikschaltgasse und die Sequenzschaltgasse bezüglich ihrer Anordnung gegeneinander vertauscht werden. Das heißt, bei einem rechtsgelenkten Fahrzeug befindet sich die Automatikschaltgasse in Fahrtrichtung gesehen auf der linken Seite und die Sequenzschaltgasse rechts davon. Um diese Umkehrung zu bewirken ist es notwendig, die Schaltvorrichtung in einer spiegelbildlichen Version herzustellen. Derartige Maßnahmen bedeuten immer hohen Aufwand, da neue Zeichnungssätze erstellt werden müssen, und neue Werkzeuge hergestellt werden müssen, beziehungsweise NC-Programmierungen umzuschreiben sind. Außerdem ist es bezüglich der Ersatzteilhaltung notwendig, beide Arten der Schaltvorrichtung auf Lager zu halten. Alle obengenannten Maßnahmen führen zu einem erheblichen Kostenaufwand und erfordern geringe Herstellungstoleranzen.

Aus der nicht vorveröffentlichten EP-A-1 064 168 bzw. DE-A-19853934 der Anmelderin ist weiterhin eine Schaltvorrichtung bekannt, die einen Wählhebel und eine Kinematik zur Übertragung der Wählbewegungen auf ein Automatikgetriebe aufweist, wobei der Wählhebel in einer Automatikschaltgasse zur Anwahl von Automatikgetriebestufen und in einer Sequenzschaltgasse zum manuellen Auf- und Abwärtsschalten von Getriebestufen um eine Wählachse bewegt werden kann, und wobei ein, um eine Wählachse schwenkbarer Zentralträger, eine am Zentralträger schwenkbar gelagerte innere Brücke, welche um eine im wesentlichen senkrecht zur Wählachse stehende erste Schaltachse schwenkbar ist, und eine an der inneren Brücke, um eine zweite Schaltachse gelagerte und schwenkbare, äußere Brücke, die mit dem Wählhebel verbunden ist, vorgesehen sind. Der Wechsel zwischen der kinematischen Situation in der Automatikgasse und der kinematischen Situation in der Sequenzschaltgasse wird hier durch den Eingriff von zwei Sperrelementen in Sperrelementeingriffe erreicht, wobei die Sperrelementeingriffe ortsfest und fest mit dem Gehäuse der Schaltvorrichtung verbunden sind. Dieses notwendige Zusammenwirken einer frei beweglichen Einheit (=bewegliche Teile der Schaltungsvorrichtung) mit einem ortsgebundenen Gehäuse der Schaltungsvorrichtung erfordert in der Fertigung geringe Toleranzen und hohen Montageaufwand. Besonders problematisch werden die Fertigungstoleranzen, wenn kurze Schaltwege bezüglich des Gassenwechsels erforderlich werden.

Es ist daher Aufgabe der Erfindung eine Schaltvorrichtung für ein Automatikgetriebe mit Sequenzschaltungsmöglichkeit zu finden, welche gleichermaßen für rechtsgelenkte und linksgelenkte Fahrzeuge geeignet ist und gleichzeitig mit Bauteilen mit geringen Anforderungen an die Fertigungstoleranzen realisierbar ist, ohne das freie Spiel der Schaltvorrichtung zu verschlechtern oder dieses sogar zu verbessern.

Die Aufgabe der Erfindung wird durch die Merkmale des Anspruches 1 gelöst.

Demgemäß wird vorgeschlagen, die Schaltvorrichtung für ein automatisches Kraftfahrzeuggetriebe mit einem Wählhebel und einer Kinematik zur Übertragung der Wählbewegungen auf ein Automatikgetriebe, wobei der Wählhebel in einer Automatikschaltgasse zur Anwahl von Automatikgetriebestufen um eine erste Schaltachse und in einer Sequenzschaltgasse zum manuellen Auf- und Abwärtsschalten von Getriebestufen um eine zweite Schaltachse bewegt werden kann, dahingehend zu verbessern, daß ein um eine Wählachse schwenkbarer Zentralträger, eine am Zentralträger schwenkbar gelagerte innere Brücke, welche um die im wesentlichen senkrecht zur Wählachse stehende erste Schaltachse schwenkbar ist, und eine an der inneren Brücke in der Sequenzschaltgasse, um die zweite Schaltachse gelagerte und schwenkbare, äußere Brücke, die mit dem Wählhebel verbunden ist, vorgesehen sind mittelbar oder unmittelbar am Zentralträger Mittel zur Auswahl der Schaltachsen durch eine Schwenkbewegung des Wählhebels befestigt sind.

Eine unmittelbare Befestigung am Zentralträger kann beispielsweise durch die Anbringung von Achsen oder eine mittelbare Befestigung mit Hilfe von Koppelstangen geschehen.

Mit einer derart ausgestalteten Schaltvorrichtung ist es nun einerseits möglich, sowohl bei Rechts- als auch bei Linkslenkern, die gleiche Schaltvorrichtung einzusetzen, wobei bei beiden Fahrzeugtypen der mittlere Bewegungsraum für die Automatikschaltgasse genutzt werden kann, während für ein Linkslenker-Fahrzeug der linke Bewegungsraum für die Sequenzschaltgasse und bei einem Rechtslenker-Fahrzeug der rechte Bewegungsraum für die Sequenzschaltgasse verwendet werden kann. Andererseits werden keine besonders hohen Anforderungen an die Fertigungstoleranzen der Einzelteile der erfindungsgemäßen Schaltvorrichtung gestellt, wobei das freie Spiel der Schaltvorrichtung verringert wird. Gleichzeitig kann vorteilhaft der Gassenwechselwinkel sehr klein gehalten werden, was für den Fahrer zu angenehm kurzen Schaltwegen führt.

In einer bevorzugten Ausführung der erfindungsgemäßen Schaltvorrichtung können die Mittel zur Auswahl der Schaltachsen bei der Auswahl der Automatikgasse eine Schwenkbewegung des Wählhebels um die erste Schaltachse, die Automatikschaltachse und bei der Auswahl der Sequenzschaltgasse eine Schwenkbewegung des Wählhebels um die zweite Schaltachse, die Sequenzschaltachse, erlauben.

Vorzugsweise können auch die Mittel zur Auswahl der Schaltachsen der Schaltvorrichtung Schwenkarme aufweisen, die an einer senkrecht zur Wählachse und versetzt zur ersten Schaltachse stehenden dritten Schwenkachse schwenkbar gelagert sind.

Weiterhin können die Mittel zur Auswahl der Schaltachsen, insbesondere die Schwenkarme, jeweils mindestens einen Sperrelementeingriff aufweisen, in die jeweils ein Sperrelement der äußeren Brücke, je nach Stellung des Wählhebels, eingreifen kann. Hierbei kann vorteilhaft der Abstand der jeweils einen Lagerung zur Schwenkachse gleich oder kleiner, als die Entfernung der Lagerung zum jeweiligen Sperrelementeingriff sein. Hierdurch wird ein Hebelarm erzeugt, der aus relativ kleinen Schwenkbewegungen des Zentralträgers um die Längsachse eine große Bewegung der Enden der Schwenkarme und damit der Sperrelementeingriffe bewirkt. Dies führt letztendlich dazu, daß die seitlichen Schwenkbewegungen des Wählhebels zum Wechseln zwischen der Automatikschaltgasse und der Sequenzschaltgasse klein gehalten werden können.

Die Anordnung von Schwenkachse, Lagerung (des Schwenkarmes am Gehäuse, nicht um die Schwenkachse) und Sperrelementeingriff kann einerseits in der angegebenen und in den Ausführungsbeispielen gezeigten Reihenfolge erfolgen, jedoch kann die Reihenfolge Lagerung, Schwenkachse Sperrelementeingriff verwendet werden, wobei auch hier ein größerer Hebelarm zwischen Schwenkachse und Sperrelementeingriff gegenüber dem Hebelarm Schwenkachse zur Lagerung besteht. Auch hierdurch wird eine Bewegungsverstärkung erreicht.

Außerdem können die Mittel zur Auswahl der Schaltachsen, insbesondere die Schwenkarme, jeweils eine Lagerung aufweisen, die exzentrisch zur Schwenkachse angeordnet sind. Eine mögliche vorteilhafte Ausgestaltung dieser Lagerung besteht darin, daß die jeweils eine Lagerung eine Loslagerung mit zwei Freiheitsgraden ist. Vorzugsweise bestehen die zwei Freiheitsgrade in einer Schwenkbewegung um eine Querachse und eine Schwenkbewegung um die Längsachse der Schwenkarme.

Eine vorteilhafte Ausgestaltung der Lagerung kann beispielsweise darin liegen, daß die jeweils eine Lagerung eine Ausnehmung im Schwenkarm und einen in die Ausnehmung eingreifenden ortsfesten Lagerungsstift, der vorzugsweise mit einem Schaltgehäuse verbunden ist, aufweist, wobei im Fall von zwei Lagerungsstiften diese koaxial angeordnet sein können. Hier kann entsprechend der notwendigen Bewegungsfreiheit der Schwenkarme ein elastisch ausgestalteter Lagerungsstift eingesetzt werden oder die Ausnehmung mit entsprechendem Spiel ausgestaltet sein. Möglich ist auch die Ausgestaltung des Lagerstiftes als Kugelkopf, der federnd in der Ausnehmung gelagert ist.

Bezüglich der Anordnung der Achsen liegt eine vorteilhafte Ausgestaltung der Schaltvorrichtung darin, daß die dritte Achse die Wählachse schneidet. Dies kann zum Beispiel durch die Anbringung der dritten Achse in Form von zwei seitlichen Achsschenkeln im Zentralträger geschehen.

Eine weitere besondere Ausführungsform der Schaltvorrichtung sieht vor, daß die erste Schaltachse durch das mindestens eine Sperrelement verläuft. Außerdem kann das mindestens eine Sperrelement und der mindestens eine Sperrelementeingriff im Falle des gegenseitigen Eingriffs eine drehfeste Verbindung zwischen der inneren Brücke und der äußeren Brücke bewirken.

Die Bewegungsfreiheitsgrade des Wählhebels der Schaltvorrichtung können erfindungsgemäß dadurch begrenzt werden, daß Mittel zur Begrenzung von Bewegungsgassen und/oder Bewegungsräumen vorgesehen sind. Diese können einerseits zumindest teilweise am Gehäuse und/oder andererseits zumindest teilweise an der inneren und/oder äußeren Brücke befestigt sein.

Eine weitere erfindungsgemäße Ausgestaltung der Schaltvorrichtung sieht vor, daß diese drei nebeneinander liegenden, vorzugsweise im wesentlichen parallel zueinander ausgerichteten, Bewegungsräume (I, II, III) und jeweils zwei benachbarte Bewegungsräume (I, II; II, III) für unterschiedliche Funktionen vorgesehen sind.

Bei dieser Ausgestaltungsform kann der innen liegende Bewegungsraum (II) als Automatikschaltgasse und die beiden außen liegenden Bewegungsräume (I, III) als Sequenzschaltgasse dienen.

Außerdem kann die Automatikschaltgasse und die mindestens eine Sequenzschaltgasse in ihrer Breite und gegebenenfalls in ihrer Länge durch eine Bewegungskulisse für den Wählhebel gebildet oder zusätzlich begrenzt sein. Bevorzugt weist hierbei die Bewegungskulisse eine einzige Automatikschaltgasse und eine einzige Sequenzschaltgasse auf, wobei zwischen Automatikschaltgasse und Sequenzschaltgasse eine Verbindungsgasse (Wählgasse) vorgesehen ist.

Entsprechend einer besonderen Ausgestaltung schlägt der Erfinder weiterhin vor, daß die erste und die zweite Schaltachse exzentrisch und/oder parallel zueinander angeordnet sind.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen.

Die Figuren zeigen im Einzelnen:
- Figur 1:: Schaltvorrichtung in seitlicher 3D-Ansicht von rechts mit Wählhebel in Mittelstellung in der Automatikschaltgasse;
- Figur 2:: Schaltvorrichtung in seitlicher 3D-Ansicht von rechts mit Wählhebel in "P"-Stellung in der Automatikschaltgasse;
- Figur 3:: Schaltvorrichtung in seitlicher 3D-Ansicht von links mit Wählhebel in "P"-Stellung in der Automatikschaltgasse;
- Figur 4:: Schaltvorrichtung in seitlicher 3D-Ansicht von rechts mit Wählhebel in Mittelstellung in der rechten Sequenzschaltgasse;
- Figur 4a:: Schaltvorrichtung aus Figur 4 in seitlicher 3D-Ansicht von links;
- Figur 5:: Schaltvorrichtung in seitlicher 3D-Ansicht von rechts mit zurückgezogenem Wählhebel in der rechten Sequenzschaltgasse;
- Figur 6:: Schaltvorrichtung in frontaler 3D-Ansicht mit Wählhebel in Mittelstellung in der Automatikschaltgasse;
- Figur 7:: Schaltvorrichtung in frontaler 3D-Ansicht mit Wählhebel in seitlicher Auslenkung nach links in einer Sequenzschaltgasse;
- Figur 8:: Schaltvorrichtung in frontaler 3D-Ansicht mit Wählhebel in seitlicher Auslenkung nach rechts in einer Sequenzschaltgasse;
- Figur 9:: Seitliche 3D-Ansicht der inneren und äußeren Brücke mit Teilen des Gehäuses von rechts mit Wählhebel in Mittelstellung in der Automatikschaltgasse;
- Figur 10:: Seitliche 3D-Ansicht der inneren und äußeren Brücke mit Teilen des Gehäuses von rechts mit Wählhebel in Mittelstellung in der Sequenzschaltgasse;
- Figur 11:: Seitliche 3D-Ansicht der inneren und äußeren Brücke mit Teilen des Gehäuses von rechts mit zurückgezogenem Wählhebel in der Sequenzschaltgasse;
- Figur 12:: 3D-Ansicht der inneren und äußeren Brücke mit Teilen des Gehäuses von hinten mit Wählhebel in der Sequenzschaltgasse;
- Figur 13-16:: Schematische Ansicht der Bewegungsräume und Bewegungsgassen im Schnitt A-A der Figuren 17 und 18;
- Figur 17:: Schematische Ansicht der Bewegungsräume und Bewegungsgassen im Schnitt von hinten;
- Figur 18:: Schematische Ansicht der Bewegungsräume und Bewegungsgassen im Schnitt von der Seite.
- Figur 19, 20:: Zwei 3D-Ansichten der Schaltvorrichtung mit Wählhebel in zwei unterschiedlichen Positionen in der Automatikschaltgasse und einer Mittelposition in der Sequenzschaltgasse aus unterschiedlichen Perspektiven.

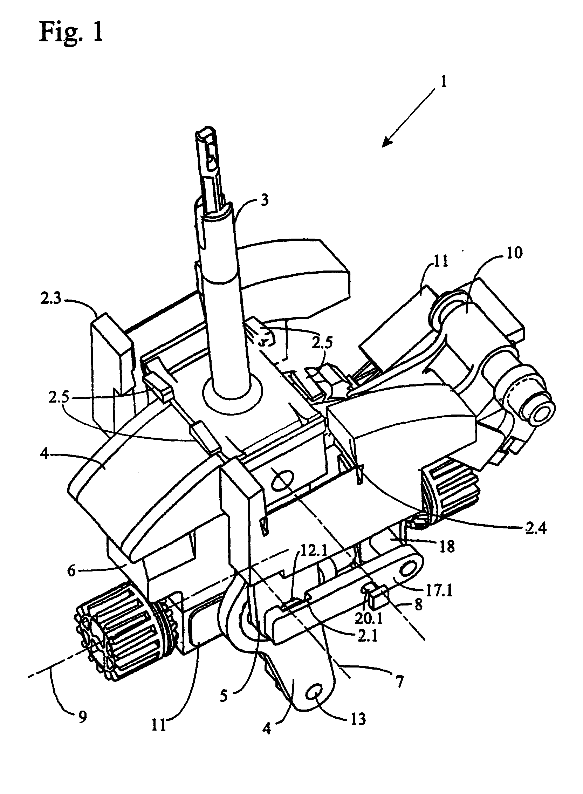

Die Figuren 1 bis 5 zeigen unterschiedliche 3D-Ansichten eines bevorzugten Ausführungsbeispieles der erfindungsgemäßen Schaltvorrichtung mit unterschiedlichen Stellungen des Wählhebels. Der Aufbau dieser Schaltvorrichtung ist mit seinen kinematisch wirksamen Elementen symmetrisch, in bezug auf eine in Fahrzeugrichtung und senkrecht liegende Ebene durch die Schaltvorrichtung, ausgeführt.

Die Schaltvorrichtung 1 besteht im wesentlichen aus einem Zentralträger 6, der um eine, in Fahrzeugrichtung liegende Wählachse 9 in einem - hier nur teilweise dargestellten - Gehäuse 2 gelagert ist. Der Zentralträger 6 weist auf beiden Längsseiten einen Ausschnitt 6.1 für einen Lagereinsatz 11 auf. Der Zentralträger 6 wird von einer u-förmigen, inneren Brücke 4 seitlich umschlossen, die auf beiden Seiten eine runde Achsöffnung 4.1 aufweist, in die der Lagereinsatz 11 mit dem Achselement 11.1 eingreift, so daß die innere Brücke um die vom Lagereinsatz 11 gebildete Achse drehbeweglich ist. Die beidseits am Zentralträger 6 angeordneten Lagereinsätze 11 erzeugen somit eine erste Schaltachse 7, um die sich die innere Brücke 4 verschwenken kann. Zusätzlich besteht eine Schwenkmöglichkeit des Zentralträgers 6 um die senkrecht zur ersten Schaltachse 7 stehende Wählachse 9, innerhalb des Gehäuses 2.

Die innere Brücke 4 wird selbst wiederum von einer äußeren Brücke 5 umschlossen, wobei die innere und die äußere Brücke 4 und 5 im oberen Bereich durch die zweite Schaltachse 8 drehbeweglich um diese Achse miteinander verbunden sind. Weiterhin weist die äußere Brücke 5 beidseits im unteren Bereich je ein Sperrelement 12.1 und 12.2 auf, welche erfindungsgemäß in der Mittelstellung jeweils in, beidseits am Gehäuse 2 angeordnete, Sperrelementeingriffe 2.1 und 2.2 eingreifen.

Die Sperrelementeingriffe 2.1 und 2.2 sind hier als Ausnehmungen je eines rechten und eines linken Schwenkarmes 17.1 und 17.2 ausgebildet, wobei die Schwenkarme 17.1 und 17.2 endständig an der senkrecht zur Wählachse 9 stehenden Schwenkachse 18 gelagert sind. Die Schwenkarme 17.1 und 17.2 ihrerseits verfügen über eine Bohrung 19.1 und 19.2, in die ein fest mit dem Gehäuse verbundener Lagerungsstift 20.1, 20.2 eingreift. Die Bohrungen 19.1, 19.2 sind derart dimensioniert, daß eine Loslagerung der'Schwenkarme 17.1, 17.2 mit zwei Freiheitsgraden (Drehung um die Stiftachse 21.1, 21.2 und Drehung um die Längsachse des Schwenkarmes) entsteht. Die Längsachsen 21.1, 21.2 der Lagerungsstifte 20.1 und 20.2 sind koaxial angeordnet.

Es wird also mittels der beiden Schwenkarme 17.1 und 17.2, die um die Y-Achse (≅Fahrzeugquerachse ≅Schwenkachse 18) gelagert angebracht sind, eine Fixierung des Wählhebels 3 in X-Richtung (≅Fahrzeuglängsachse ≅Wählachse 9) in der Automatikgasse (=Mittelstellung) erreicht. Wird der Wählhebel seitlich in die Sequenzschaltgasse geschwenkt, geben die Schwenkarme17.1, 17.2 in Verbindung mit den Sperrelementeingriffen 2.1, 2.2 die Sperrelemente 12.1, 12.2 für eine Schwenkbewegung des Wählhebels 3 um die zweite Schaltachse 8 frei. Befindet sich also der Wählhebel und damit die äußere Brücke 5 im mittleren Bewegungsraum, so wird eine Schwenkbewegung des Wählhebels 3 in Fahrzeuglängsrichtung, über die äußere Brücke 5, über die zweite Schaltachse 8 zur inneren Brücke 4 übertragen, welche sich dann ebenfalls um die erste Schaltachse 7 verschwenkt. Findet eine Seitwärtsbewegung des Wählhebels 3 statt, so lösen sich die Sperrelemente 12.1 und 12.2 aus den Sperrelementeingriffen 2.1 und 2.2, so daß eine Schwenkbewegung des Wählhebels 3 in Fahrzeugrichtung nicht mehr als Drehbewegung um die ersten Schaltachse auf die innere Brücke 4 übertragen wird, sondern lediglich zu einer Drehbewegung der äußeren Brücke 5 um die zweite, obenliegende Schaltachse 8 führt.

Für das Ausrücken der Sperrelemente 12.1 und 12.2 aus den Sperrelementeingriffen 2.1 und 2.2 ist es in diesem Fall unerheblich, ob eine Schwenkbewegung des Wählhebels nach rechts oder nach links stattfindet. Weiterhin reicht es auch aus, wenn lediglich auf einer Seite der Schaltung ein einziger Schwenkarm angebracht ist, um die beschriebene Funktion zu erreichen. Bessere Bewegungsabläufe werden allerdings durch zwei symmetrisch angebrachte Schwenkarme 17.1 und 17.2 erreicht.

Es entstehen also auf diese Art und Weise drei unterschiedliche Bewegungsräume für den Wählhebel 3 mit unterschiedlichen kinematischen Wirkungen, wobei jeweils zwei benachbarten Bewegungsräume unterschiedlichen Funktionen zuzuordnen sind. Im mittleren Bewegungsraum kann der Wählhebel 3 in Fahrzeugrichtung vor und zurück bewegt werden, wodurch ein Verschwenken der inneren Brücke 4 um die erste Schaltachse 7 erzeugt wird. Wird der Wählhebel 3 seitwärts ausgelenkt, so entsteht auf beiden Seiten eine grundsätzlich neue kinematische Situation, da nun die innere Brücke 4 trotz einer Schwenkbewegung in Fahrzeugrichtung des Wählhebels 3 stillstehen kann und ausschließlich eine Schwenkbewegung der äußeren Brücke 5 um die zweite obenliegende Schaltachse 8 stattfindet. Es sind also drei Bewegungsräume entstanden, die zumindest zwei grundsätzlich unterschiedliche Funktionen aufweisen können. Im mittleren Bewegungsraum besteht - wie in diesem Ausführungsbeispiel gezeigt - die Möglichkeit, den unteren Arm der inneren Brücke 4 mit einem Seilzug oder einem Gestänge zu verbinden, welches die Schwenkbewegung im mittleren Bewegungsraum an ein Automatikgetriebe weitergibt. Meist wird durch diese Bewegung die Anwahl der verschiedenen Fahrstufen eines Automatikgetriebes gesteuert werden. Weiterhin kann sowohl der rechte, als auch der linke Bewegungsraum des Wählhebels 3 dazu genutzt werden, die Sequenzschaltung eines Automatikgetriebes zu triggern. Hierfür werden meist elektronische Sensoren verwendet, die beispielsweise ausschließlich auf eine Relativbewegung zwischen der inneren Brücke 4 und der äußeren Brücke 5 reagieren. Es besteht aber auch die Möglichkeit, Sensoren, beispielsweise in der Abdeckung, anzubringen und die Bewegungsinformationen von dort elektronisch weiterzuleiten. Da die Schaltbewegungen des Wählhebels in den seitlichen Bewegungsräumen keine Bewegungen der inneren Brücke 4 hervorrufen, kann auch die Seilzugverbindung zum Getriebe, trotz Schaltbewegungen des Wählhebels im Eingriff bleiben, ohne Schaltvorgänge über den Seilzug auszulösen.

Im gezeigten Ausführungsbeispiel sind zusätzlich - für eine verbesserte Führung und für eine Begrenzung der Bewegungsräume des Wählhebels 3 - Führungselemente 2.3 bis 2.5 vorgesehen, die fest mit dem nur teilweise dargestellten Gehäuse 2 verbunden sind. Die Führungselemente 2.3 und 2.4 stellen einen beidseits wirksamen Bewegungsschacht dar, in dem die innere und äußere Brücke 4 und 5 durch ein Seitenverschwenken des Wählhebels 3 eingeführt werden können. Befindet sich der Wählhebel 3 und damit die innere und äußere Brücke 4 und 5 in einer seitlichen Stellung, so verhindern die Führungselemente 2.3 beziehungsweise 2.4 ein Kippen der inneren Brücke 4, während die äußere Brücke 5 um die zweite Schaltachse 8 beweglich bleibt. Zusätzlich wird die Führung des Wählhebels 3 noch durch die Führungselemente 2.5 geführt.

In der Figur 1 befindet sich der Wählhebel 3 in der Mittelstellung im mittleren Bewegungsraum.

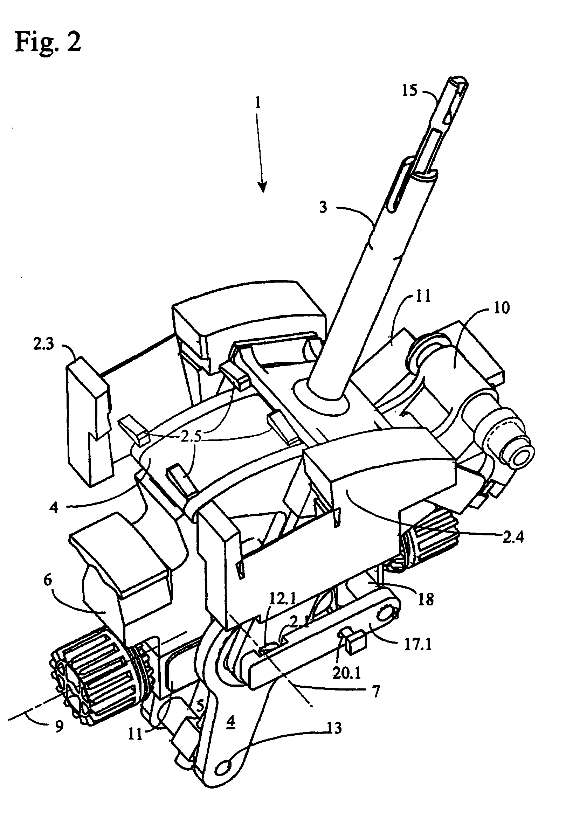

Die Figur 2 zeigt die gleiche Ansicht wie Figur 1, jedoch befindet sich der Wählhebel 3 im mittleren Bewegungsraum, in einer vorderen Stellung. Dies entspricht der "D"-Stellung des Automatikgetriebes.

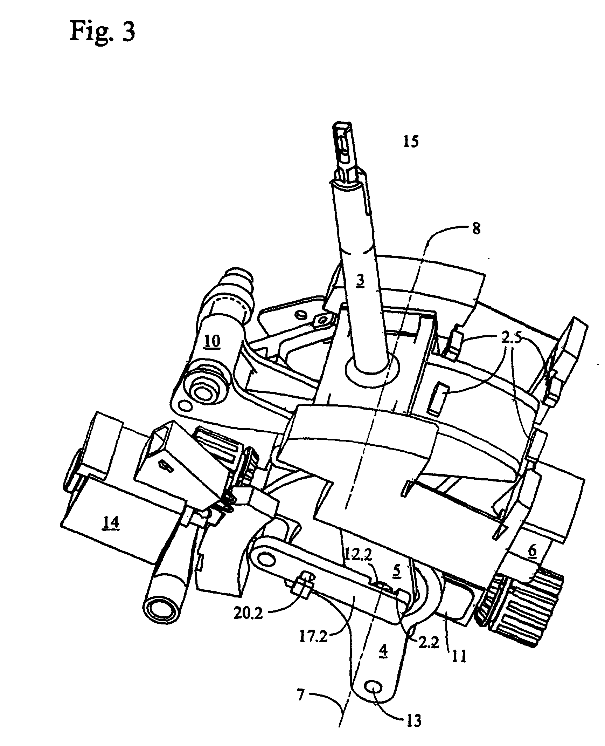

Die Figur 3 zeigt die Schaltvorrichtung 1 mit dem Wählhebel 3 in der gleichen Position wie in Figur 2, jedoch von der gegenüberliegenden Seite.

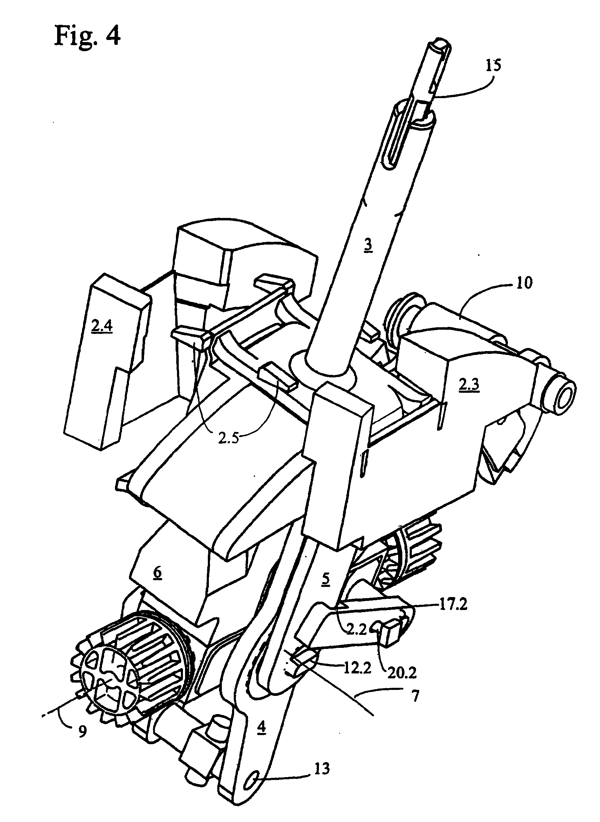

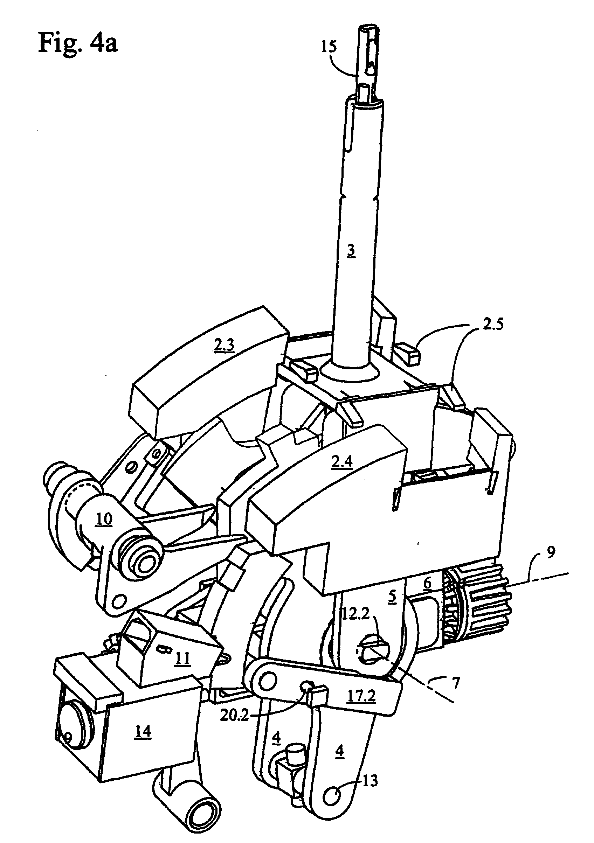

Die Figur 4 zeigt die Schaltvorrichtung 1 mit dem Wählhebel 3 in einem seitlichen Bewegungsraum, das heißt also in diesem Falle in einer Sequenzschaltgasse, wobei der Wählhebel 3 sich bezüglich seiner Schwenkbewegung in Fahrzeugrichtung in Mittelstellung befindet. Deutlich ist zu erkennen, daß das Sperrelement 12.2 aus dem Sperrelementeingriff 2.2 des nach oben geschwenkten Schwenkarmes 17.2 ausgerückt ist, so daß die äußere Brücke 5 um die zweite Schaltachse 8 verschwenkt werden kann.

Die Figur 4a zeigt die Schaltvorrichtung in der gleichen Stellung wie Figur 4, jedoch von der gegenüberliegenden Seite. Deutlich ist auch hier zu erkennen, daß das Sperrelement 12.1 aus dem Sperrelementeingriff 2.1 des nach unten geschwenkten Schwenkarmes 17.1 ausgerückt ist, so daß die äußere Brücke 5 um die zweite Schaltachse 8 bewegt werden kann.

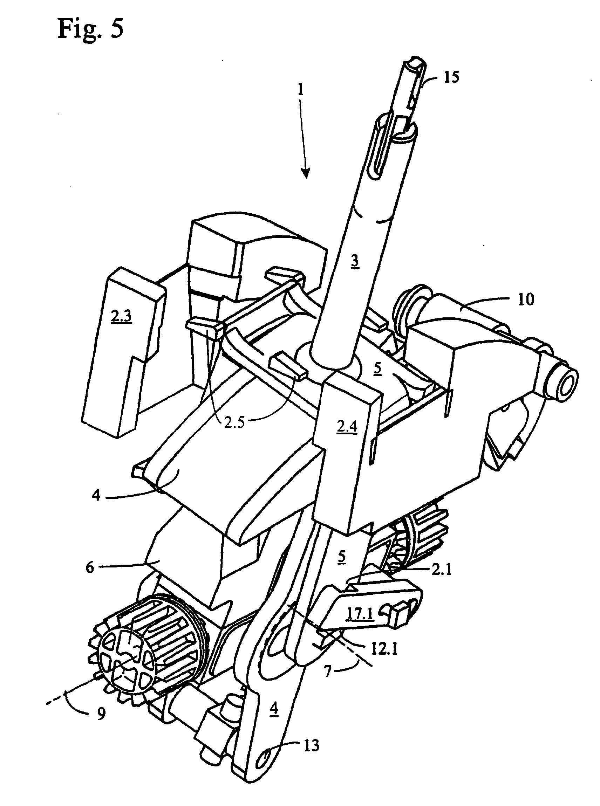

In der Figur 5 ist die Bewegungsfreiheit des Wählhebel 3 in Längsrichtung dargestellt, sobald sich dieser in der seitlichen Sequenzschaltgasse befindet.

Zusätzlich ist in den Figuren 1 bis 5 auch ein "Key Lock"-System und ein "Shift Lock"-System dargestellt. Beide Systeme sind an sich im Stand der Technik zum Beispiel aus der Patentanmeldung DE 195 56 034 der Anmelderin - deren Offenbarungsgehalt hiermit in die Anmeldung übernommen wird - bekannt und werden daher nicht nochmals ausführlich in ihren Funktionen beschrieben.

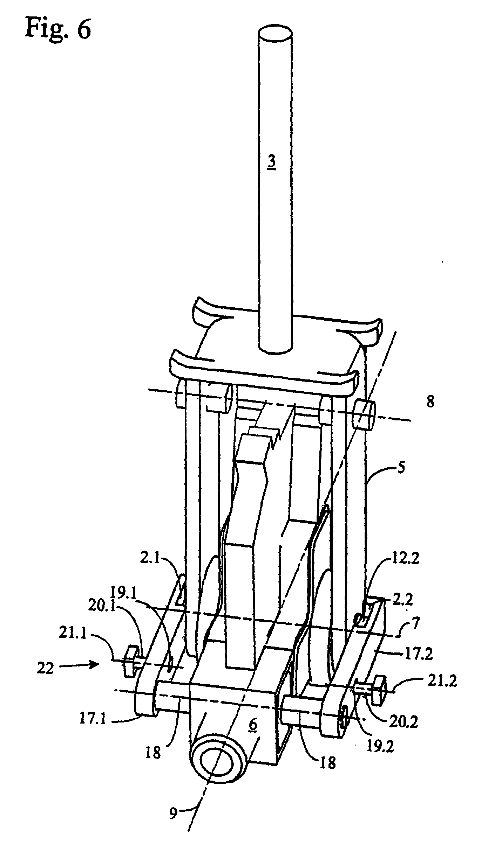

Die Figuren 6 bis 8 zeigen unterschiedliche 3D-Ansichten des Zusammenwirkens der äußeren Brücke 5 und der Schwenkarme 17.1 und 17.2 zur Verriegelung und Entriegelung des Wählhebels 3 in den unterschiedlichen Gassenstellungen.

In der Figur 6 ist der Wählhebel in einer Stellung in der Automatikschaltgasse dargestellt. Die seitlich angeordneten Schwenkarme 17.1, 17.2 haben beide die gleiche Lage und die Sperrelemente 12.1 und 12.2 greifen in die Sperrelementeingriffe 2.1 und 2.2 ein, so daß eine Bewegung der äußeren Brücke 5 und des Wählhebels 3 um die erste Schaltachse 7 ermöglicht wird.

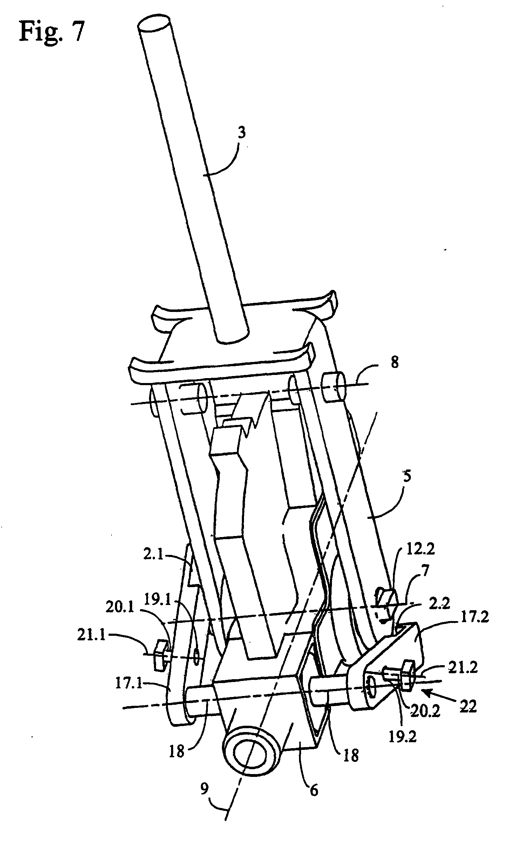

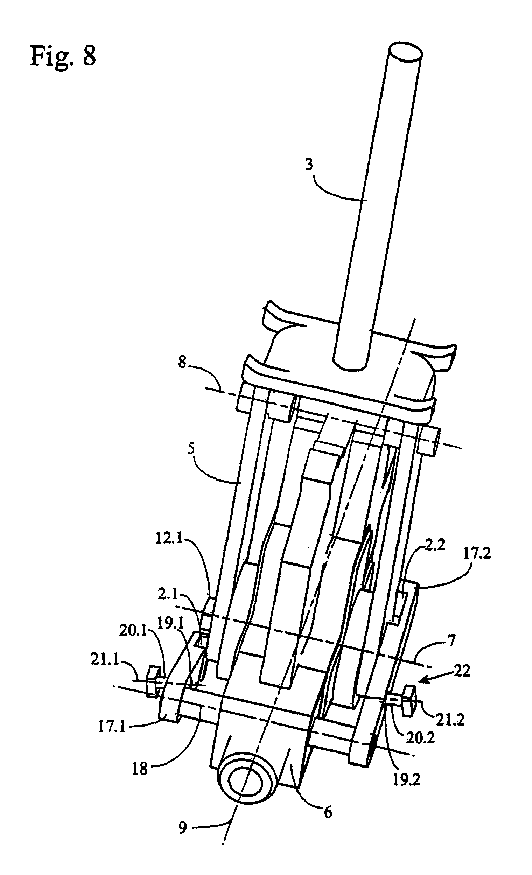

In den Figuren 7 und 8 ist ein seitlich nach links beziehungsweise nach rechts ausgeschwenkter Wählhebel 3 dargestellt, der sich jeweils in einer seitlichen Position in einer Sequenzschaltgasse befindet. In diesen Stellungen wird einerseits eine leichte Anhebung oder Absenkung der Sperrelemente 12.1, 12.2 und gleichzeitig eine entgegen gerichtete Bewegung der Schwenkarme 17.1, 17.2 herbeigeführt, so daß die Sperrelemente 12.1 und 12.2 aus den Sperrelementeingriffen 2.1, 2.2 am Ende der Schwenkarme 17.1, 17.2 ausfahren und damit die Arme der äußeren Brücke 5 frei beweglich wird. Nun kann eine Bewegung des Wählhebels 3 um die oben liegende zweite Schaltachse 8 stattfinden, die im Fahrzeug zur Auf- und Abschaltung der sequentiellen Getriebesteuerung genutzt wird.

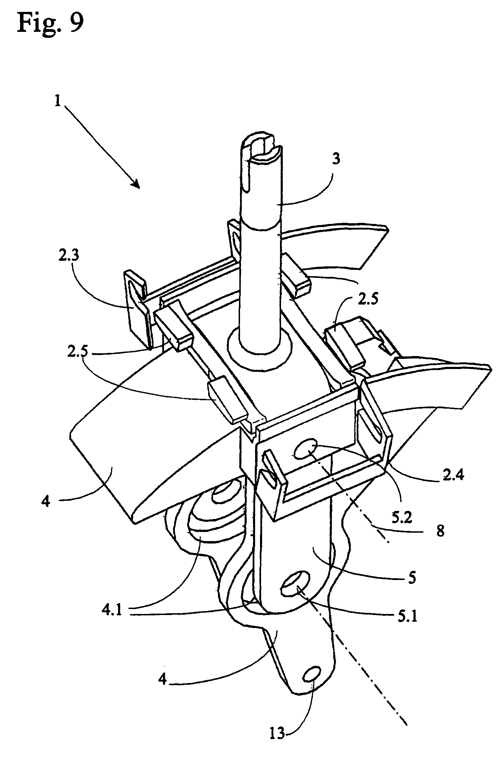

In der Figur 9 ist die innere Brücke 4 mit den beiden Achsöffnungen 4.1 dargestellt, in die im zusammengebauten Zustand das Achselement 11.1 des Lagereinsatzes 11 eingreift. Die äußere Brücke 5 umgreift die innere Brücke 4, wobei die beiden Arme der Brücken im unteren Bereich ebenfalls eine Achsöffnung 5.1 aufweisen, in die die Sperrelemente 12.1 und 12.2 eingesetzt werden können, die dann gegebenenfalls mit den Sperrelementeingriffen 2.1 und 2.2 des Gehäuses 2 zusammenwirken. Der Wählhebel 3 befindet sich in dieser Darstellung im mittleren Bewegungsraumes, der meist der Automatikschaltgasse entspricht.

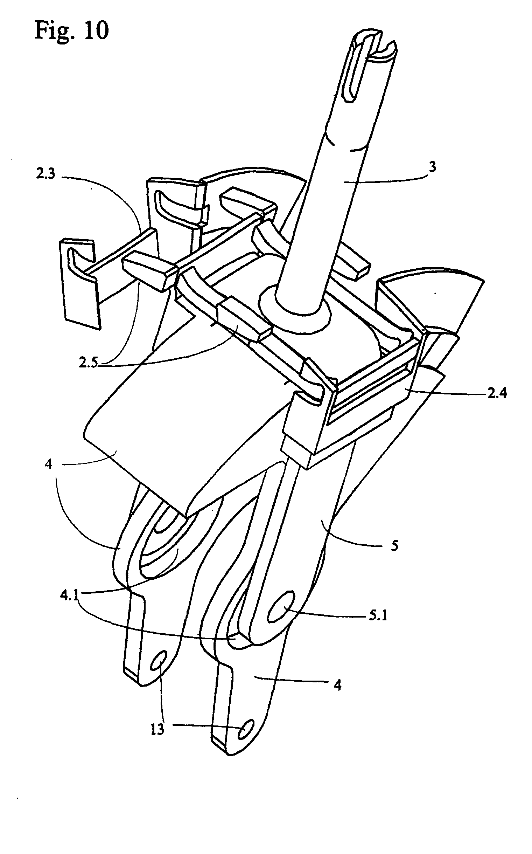

Die Figur 10 zeigt eine ähnliche Ansicht wie Figur 9, jedoch ist hierbei der Wählhebel 3 seitlich verschwenkt und befindet sich bezüglich der Schwenkbewegung um die zweite Schaltachse 8 in einer Mittelstellung.

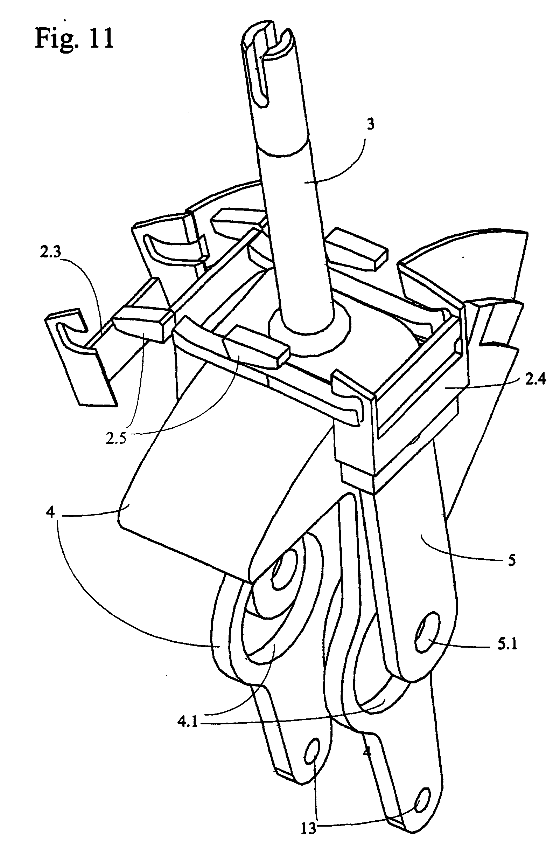

In der Figur 11 ist dargestellt, wie die Wählhebel 3 um die zweite Schaltachse 8 in einer Sequenzschaltgasse gegen die Fahrzeugrichtung ausgelenkt wird. Es ist hierbei deutlich zu erkennen, daß die Achsöffnungen 4.1 und 5.1 sich exzentrisch zueinander positioniert haben.

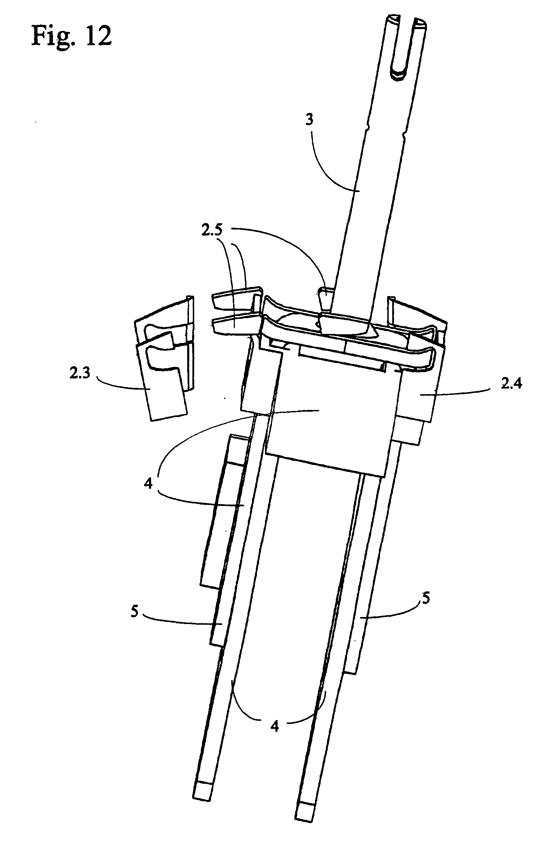

Die Figur 12 zeigt die Situation aus Figur 11 in einer Frontalansicht in Fahrzeugrichtung.

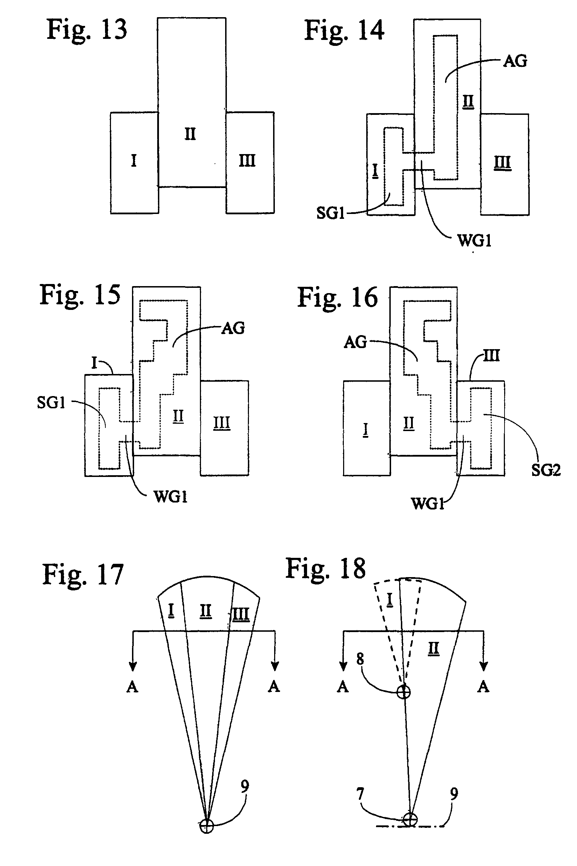

Die Figuren 13 bis 16 zeigen schematische Darstellungen der Bewegungsräume des Wählhebels der erfindungsgemäßen Vorrichtung und gegebenenfalls der darin angeordneten Bewegungsgassen.

Die Figuren 13 bis 16 stellen einen Schnitt A-A aus den Figuren 17 und 18 dar und zeigen die Bewegungsräume des erfindungsgemäßen Beispiels einer Schaltvorrichtung in einer Ebene. In der Figur 13 sind die Bewegungsräume I, II und III dargestellt, die in ihrer Draufsicht aus drei aneinanderliegenden Rechtecken bestehen. Das mittlere Rechteck II entspricht dem Bewegungsraum, dem eine Automatikschaltgasse zugeordnet werden kann, während die beidseits angeordneten Bewegungsräume I und III, die in ihrer Längsausrichtung parallel angeordnet sind, die Bewegungsräume darstellen, welche für die Sequenzschaltgasse verwendet oder gegebenenfalls auch für zwei unterschiedliche Funktionen benutzt werden können.

Beispielhaft sind in der Figur 14 zwei Schaltgassen, nämlich die Automatikschaltgasse AG und die Sequenzschaltgasse SG1 dargestellt, wobei beide Schaltgassen miteinander über die Wählgasse WG1 in Verbindung stehen. Eine derartige Ausgestaltung der Schaltgasse kommt im wesentlichen dann in Betracht, wenn in der Automatikschaltgasse eine Rastierung für die Schaltbewegung vorhanden ist.

Wird die Schaltvorrichtung mit den hier dargestellten Bewegungsräumen bei Fahrzeugen mit unterschiedlicher Lenkradposition (Rechtslenker oder Linkslenker) verwendet, so kann auf einfache Weise - z.B. durch den Austausch der Abdeckung - die Anordnung der Schaltgassen der Positionierung des Fahrersitzes angepaßt werden. Die sonst aufwendige Änderung in der eigentlichen Schaltvorrichtung kann unterbleiben.

Die Figuren 15 und 16 zeigen ein entsprechendes Beispiel einer Schaltvorrichtung mit den gleichen Bewegungsräumen I bis III. Der Unterschied der beiden Ausführungen einer Schaltvorrichtung zwischen Figur 15 und Figur 16 besteht darin, daß eine spiegelbildlich verkehrte Abdeckung mit entsprechend spiegelbildlich angeordneten Bewegungsgassen für den Wählhebel verwendet wird.

In der Figur 17 sind nochmals schematisch in einer Frontansicht die Bewegungsräume I, II und III dargestellt, während die Figur 18 eine Seitenansicht der gleichen Bewegungsräume darstellt, wobei in der Figur 18 die Positionierungen - insbesondere der ersten Schaltachse 7 und der zweiten Schaltachse 8 und auch die Lage der Wählachse 9 - gezeigt sind.

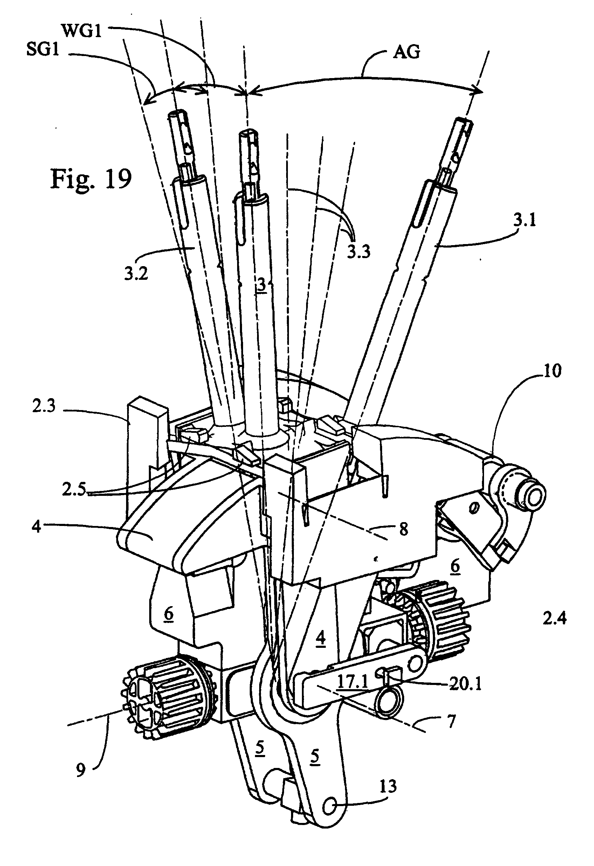

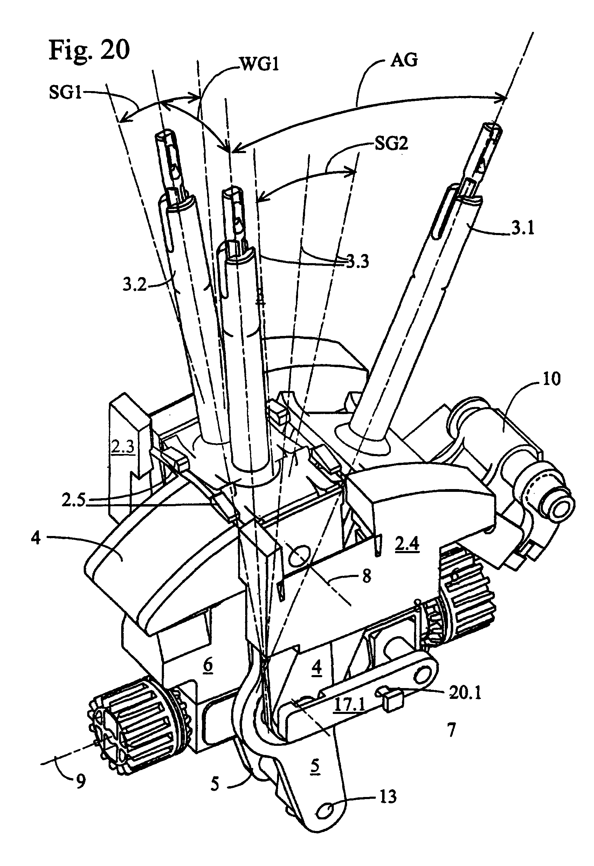

Zur weiteren Verdeutlichung der Erfindung ist in den Figuren 19 und 20 die mögliche Positionierung des Wählhebels einschließlich der Bewegungsgassen in zwei unterschiedlichen Perspektiven dargestellt. Die dargestellte Positionierung der Brücken 4 und 5 und des Zentralträgers 6 zeigt eine Situation mit dem Wählhebel 3 in einer Mittelstellung in der Automatikschaltgasse. Die beiden zusätzlich daneben dargestellten Wählhebelpositionen 3.1 und 3.2 zeigen unterschiedliche Bewegungssituationen des Wählhebels. Die Wählhebelposition 3.1 entspricht einer Stellung des Wählhebels 3 in der Automatikschaltgasse in der vordersten Position ("P"-Stellung), während der Wählhebel in der Position 3.2 nach links in die Sequenzschaltgasse ausgerückt dargestellt ist. Zusätzlich ist, mit dem Bezugszeichen 3.3 versehen, die rechte Seite der möglichen Positionierungen des Wählhebels 3 in der rechten Sequenzschaltgasse angedeutet.

Insgesamt wird also mit der erfindungsgemäßen Schaltvorrichtung eine Schaltvorrichtung beschrieben, die für rechtsgelenkte und linksgelenkte Fahrzeuge gleichermaßen geeignet ist und gleichzeitig mit Bauteilen mit geringen Anforderungen an die Fertigungstoleranzen realisierbar ist, wobei das freie Spiel der Schaltvorrichtung gegenüber der bekannten Ausführung nicht verschlechtert wird oder sogar verbessert, also reduziert wird.

### BEZUGSZEICHENLISTE:

- 1: Schaltvorrichtung
- 2: Gehäuse
- 2.1, 2.2: Sperrelementeingriffe
- 2.3 - 2.5: Führungselemente
- 3: Wählhebel
- 3.1, 3.2, 3.3: Wählhebelpositionen
- 4: innere Brücke
- 4.1, 4.2: Achsöffnungen
- 4.3: Einschubschlitze
- 4.4: Querträger
- 5: äußere Brücke
- 5.1, 5.2: Achsöffnungen
- 6: Zentralträger
- 7: erste Schaltachse
- 8: zweite Schaltachse
- 9: Wählachse
- 10: "Key Lock"-System
- 11: Lagereinsatz
- 11.1: Achselement
- 12.1, 12.2: Sperrelemente
- 13: Seilzuganbindung
- 14: "Shift Lock"-System
- 15: Zugstange
- 16: Riegel
- 17.1, 17.2: Schwenkarm
- 18: dritte Achse / Schwenkachse
- 19.1, 19.2: Ausnehmung / Bohrung
- 20.1, 20.2: Lagerungsstift
- 21.1, 21.2: Längsachse der Lagerungsstifte / Stiftachsen
- 22: Loslagerung
- I: linker Bewegungsraum
- II: mittlerer Bewegungsraum
- III: rechter Bewegungsraum
- AG: Automatikschaltgasse
- SG1: Sequenzschaltgasse 1
- SG2: Sequenzschaltgasse 2
- WG1: Wählgasse 1
- WG2: Wählgasse 2

## Patentansprüche

1. Schaltvorrichtung eines automatischen Kraftfahrzeuggetriebes mit einem Wählhebel (3) und einer Kinematik (4 - 9) zur Übertragung der Wählbewegungen auf ein Automatikgetriebe, wobei der Wählhebel (3) in einer Automatikschaltgasse (AG) zur Anwahl von Automatikgetriebestufen um eine erste Schaltachse (7) und in einer Sequenzschaltgasse (SG1, SG2) zum manuellen Auf- und Abwärtsschalten von Getriebestufen um eine zweite Schaltachse (8) bewegt werden kann, **dadurch gekennzeichnet, daß** ein um eine Wählachse (9) schwenkbarer Zentralträger (6), eine am Zentralträger (6) schwenkbar gelagerte innere Brücke (4), welche um die im wesentlichen senkrecht zur Wählachse (9) stehende erste Schaltachse (7) schwenkbar ist, und eine an der inneren Brücke (4) in der Sequenzschaltgasse, um die zweite Schaltachse (8) gelagerte und schwenkbare, äußere Brücke (5), die mit dem Wählhebel (3) verbunden ist, vorgesehen sind, und daß mittelbar oder unmittelbar am Zentralträger (6) Mittel zur Auswahl der Schaltachsen durch eine Schwenkbewegung des Wählhebels (3) befestigt sind.

2. Schaltvorrichtung gemäß vorstehenden Anspruch 1, **dadurch gekennzeichnet, daß** die Mittel zur Auswahl der Schaltachsen bei Auswahl der Automatikgasse eine Schwenkbewegung des Wählhebels (3) um die erste Schaltachse, die Automatikschaltachse, (7) erlauben und bei Auswahl der Sequenzschaltgasse eine Schwenkbewegung des Wählhebels (3) um die zweite Schaltachse, die Sequenzschaltachse (8) erlauben.

3. Schaltvorrichtung gemäß einem der vorstehenden Ansprüche 1 bis 2, **dadurch gekennzeichnet, daß** die Mittel zur Auswahl der Schaltachsen Schwenkarme (17.1, 17.2) aufweisen, die an einer senkrecht zur Wählachse (9) und versetzt zur ersten Schaltachse (7) stehenden dritte Schwenkachse (18) schwenkbar gelagert sind.

4. Schaltvorrichtung gemäß einem der vorstehenden Ansprüche 1 bis 3, **dadurch gekennzeichnet, daß** die Mittel zur Auswahl der Schaltachsen, insbesondere die Schwenkarme (17.1, 17.2), jeweils mindestens einen Sperrelementeingriff (2.1, 2.2) aufweisen, in die jeweils ein Sperrelement (12.1, 12.2) der äußeren Brücke(5), je nach Stellung des Wählhebels (3), eingreifen kann.

5. Schaltvorrichtung gemäß einem der vorstehenden Ansprüche 1 bis 4, **dadurch gekennzeichnet, daß** die Mittel zur Auswahl der Schaltachsen, insbesondere die Schwenkarme (17.1, 17.2), jeweils eine Lagerung (22) aufweisen, die exzentrisch zur Schwenkachse (18) angeordnet sind.

6. Schaltvorrichtung gemäß dem vorstehenden Anspruch 5, **dadurch gekennzeichnet, daß** der Abstand der jeweils einen Lagerung (22) zur Schwenkachse (18) gleich oder kleiner ist, als die Entfernung der Lagerung (22) zum Sperrelementeingriff (2.1, 2.2).

7. Schaltvorrichtung gemäß dem vorstehenden Anspruch 6, **dadurch gekennzeichnet, daß** die jeweils eine Lagerung (22) eine Loslagerung mit zwei Freiheitsgraden ist.

8. Schaltvorrichtung gemäß einem der vorstehenden Ansprüche 6 bis 7, **dadurch gekennzeichnet, daß** die jeweils eine Lagerung (22) eine Ausnehmung (19.1, 19.2) im Schwenkarm (17.1, 17.2) und einen in die Ausnehmung (19.1, 19.2) eingreifenden ortsfesten Lagerungsstift (20.1, 20.2), der vorzugsweise mit einem Schaltgehäuse verbunden ist, aufweist.

9. Schaltvorrichtung gemäß dem vorstehenden Anspruch 8, **dadurch gekennzeichnet, daß** die Längsachsen (21.1, 21.2) der Lagerungsstifte (20.1, 20.2) bei einer Stellung des Wählhebels (3) in der Automatikgasse koaxial angeordnet sind.

10. Schaltvorrichtung gemäß einem der vorstehenden Ansprüche 1 bis 9, **dadurch gekennzeichnet, daß** die dritte Achse (18) die Wählachse (9) schneidet.

11. Schaltvorrichtung gemäß einem der vorstehenden Ansprüche 1 bis 10, **dadurch gekennzeichnet, daß** die erste Schaltachse (7) durch das mindestens eine Sperrelement (12.1, 12.2) verläuft.

12. Schaltvorrichtung gemäß einem der vorstehenden Ansprüche 1 bis 11, **dadurch gekennzeichnet, daß** das mindestens eine Sperrelement (12.1, 12.2) und der mindestens eine Sperrelementeingriff (2.1, 2.2) im Falle des gegenseitigen Eingriffs eine drehfeste Verbindung zwischen der inneren Brücke (4) und der äußeren Brücke (5) bewirkt.

13. Schaltvorrichtung gemäß einem der vorstehenden Ansprüche 1 bis 12, **dadurch gekennzeichnet, daß** Mittel (2.3-2.5) zur Begrenzung von Bewegungsgassen und/oder Bewegungsräumen vorgesehen sind.

14. Schaltvorrichtung gemäß dem vorstehenden Anspruch 13, **dadurch gekennzeichnet, daß** die Mittel (2.3-2.5) zur Begrenzung von Bewegungsgassen und/oder Bewegungsräumen zumindest teilweise am Gehäuse (2) befestigt sind.

15. Schaltvorrichtung gemäß einem der vorstehenden Ansprüche 13 bis 14, **dadurch gekennzeichnet, daß** die Mittel (2.3-2.5) zur Begrenzung von Bewegungsgassen und/oder Bewegungsräumen zumindest teilweise an der inneren Brücke (4) befestigt sind.

16. Schaltvorrichtung gemäß einem der vorstehenden Ansprüche 13 bis 15, **dadurch gekennzeichnet, daß** die Mittel (2.3-2.5) zur Begrenzung von Bewegungsgassen und/oder Bewegungsräumen zumindest teilweise an der äußeren Brücke (5) befestigt sind.

17. Schaltvorrichtung gemäß einem der vorstehenden Ansprüche 1 bis 16, **dadurch gekennzeichnet, daß** die Schaltvorrichtung (1) drei nebeneinander liegende, vorzugsweise im wesentlichen parallel zueinander ausgerichtete, Bewegungsräume (I, II, III) aufweist und jeweils zwei benachbarte Bewegungsräume (I, II; II, III) für unterschiedliche Funktionen vorgesehen sind.

18. Schaltvorrichtung gemäß dem vorstehenden Anspruch 17, **dadurch gekennzeichnet, daß** der innen liegende Bewegungsraum (II) für die Automatikschaltgasse und die beiden außen liegenden Bewegungsräume (I, III) für mindestens eine Sequenzschaltgasse vorgesehen sind.

19. Schaltvorrichtung nach einem der vorstehenden Ansprüche 1 bis 18, **dadurch gekennzeichnet, daß** die Automatikschaltgasse und die mindestens eine Sequenzschaltgasse in ihrer Breite und gegebenenfalls Länge durch eine Bewegungskulisse für den Wählhebel (3) gebildet wird.

20. Schaltvorrichtung nach dem vorstehenden Anspruch 19, **dadurch gekennzeichnet, daß** die Bewegungskulisse eine einzige Automatikschaltgasse und eine einzige Sequenzschaltgasse aufweist, wobei zwischen Automatikschaltgasse und Sequenzschaltgasse eine Verbindungsgasse als Wählgasse vorgesehen ist.

21. Schaltvorrichtung nach einem der vorstehenden Ansprüche 1 bis 20, **dadurch gekennzeichnet, daß** die erste und die zweite Schaltachse (7, 8) exzentrisch zueinander angeordnet sind.

22. Schaltvorrichtung nach einem der vorstehenden Ansprüche 1 bis 21, **dadurch gekennzeichnet, daß** die erste und die zweite Schaltachse (7, 8) zueinander parallel angeordnet sind.

23. Schaltvorrichtung nach einem der vorstehenden Ansprüche 1 bis 22, **dadurch gekennzeichnet, daß** die Abstände der ersten und der zweiten Schaltachse (7, 8) zu einem Schaltknauf am Ende des Wählhebels (3) sich wesentlich unterscheiden.

24. Schaltvorrichtung nach einem der vorstehenden Ansprüche 1 bis 23, **dadurch gekennzeichnet, daß** zur Übertragung der Schaltbewegung des Wählhebels (3) zum Kraftfahrzeuggetriebe in zumindest einer Gasse ein Seilzug vorgesehen ist.

25. Schaltvorrichtung nach einem der vorstehenden Ansprüche 1 bis 24, **dadurch gekennzeichnet, daß** zur Übertragung der Schaltbewegung des Wählhebels (3) zum Kraftfahrzeuggetriebe in zumindest einer Gasse ein Gestänge vorgesehen ist.

26. Schaltvorrichtung nach einem der vorstehenden Ansprüche 1 bis 25, **dadurch gekennzeichnet, daß** für die Übertragung der Schaltbewegung des Wählhebels (3) zum Kraftfahrzeuggetriebe in mindestens einer Schaltgasse, vorzugsweise der Sequenzschaltgasse, eine elektronische Übertragungsvorrichtung vorgesehen ist.

27. Schaltvorrichtung nach einem der vorstehenden Ansprüche 1 bis 26, **dadurch gekennzeichnet, daß** sie über ein "Key Lock"-System (10) verfügt.

28. Schaltvorrichtung nach einem der vorstehenden Ansprüche 1 bis 27, **dadurch gekennzeichnet, daß** sie über ein "Shift Lock"-System (14) verfügt.

## Claims

1. Gear shifting apparatus of an automatic motor vehicle transmission having a selector lever (3) and a kinematic system (4 - 9) for transmitting the selection movements to an automatic transmission, wherein the selector lever (3) may be moved about a first shift axis (7) in an automatic shift gate (AG) for selecting automatic gear speeds and about a second shift axis (8) in a sequential shift gate (SG1, SG2) for manually shifting up and down from transmission gear speeds, **characterized in that** a central carrier (6) pivotable about a selection axis (9), an inner bridge (4) mounted pivotably on the central carrier (6) and pivotable about the first shift axis (7) disposed substantially at right angles to the selection axis (9), and an outer bridge (5) mounted on the inner bridge (4) in the sequential shift gate and pivotable about the second shift axis (8) and connected to the selector lever (3) are provided and that means of selecting the shift axes by virtue of a swivelling motion of the selector lever (3) are fastened indirectly or directly to the central carrier (6).

2. Gear shifting apparatus according to the preceding claim 1, **characterized in that** the means of selecting the shift axes allow, upon selection of the automatic shift gate, a swivelling motion of the selector lever (3) about the first shift axis, the automatic shift axis (7), and, upon selection of the sequential shift gate, a swivelling motion of the selector lever (3) about the second shift axis, the sequential shift axis (8).

3. Gear shifting apparatus according to one of the preceding claims 1 to 2, **characterized in that** the means of selecting the shift axes comprise swivel arms (17.1, 17.2), which are mounted pivotably on a third swivel axle (18), which is disposed at right angles to the selection axis (9) and offset relative to the first shift axis (7).

4. Gear shifting apparatus according to one of the preceding claims 1 to 3, **characterized in that** the means of selecting the shift axes, in particular the swivel arms (17.1, 17.2), each have at least one locking element engagement device (2.1, 2.2), into which in each case one locking element (12.1, 12.2) of the outer bridge (5) may engage, depending on the position of the selector lever (3).

5. Gear shifting apparatus according to one of the preceding claims 1 to 4, **characterized in that** the means of selecting the shift axes, in particular the swivel arms (17.1, 17.2), each have a bearing arrangement (22), which bearing arrangements are disposed eccentrically relative to the swivel axle (18).

6. Gear shifting apparatus according to the preceding claim 5, **characterized in that** the distance of the, in each case, one bearing arrangement (22) from the swivel axle (18) is equal to or smaller than the distance of the bearing arrangement (22) from the locking element engagement device (2.1, 2.2).

7. Gear shifting apparatus according to the preceding claim 6, **characterized in that** the, in each case, one bearing arrangement (22) is a floating bearing arrangement with two degrees of freedom.

8. Gear shifting apparatus according to one of the preceding claims 6 to 7, **characterized in that** the, in each case, one bearing arrangement (22) comprises a recess (19.1, 19.2) in the swivel arm (17.1, 17.2) and a stationary bearing pin (20.1, 20.2), which engages into the recess (19.1, 19.2) and is preferably connected to a shift housing.

9. Gear shifting apparatus according to the preceding claim 8, **characterized in that** the longitudinal axes (21.1, 21.2) of the bearing pins (20.1, 20.2), given a position of the selector lever (3) in the automatic gate, are disposed coaxially.

10. Gear shifting apparatus according to one of the preceding claims 1 to 9, **characterized in that** the third axis (18) cuts the selection axis (9).

11. Gear shifting apparatus according to one of the preceding claims 1 to 10, **characterized in that** the first shift axis (7) extends through the at least one locking element (12.1, 12.2).

12. Gear shifting apparatus according to one of the preceding claims 1 to 11, **characterized in that** the at least one locking element (12.1, 12.2) and the at least one locking element engagement device (2,1, 2.2) in the situation of mutual engagement effect a non-rotatable connection between the inner bridge (4) and the outer bridge (5).

13. Gear shifting apparatus according to one of the preceding claims 1 to 12, **characterized in that** means (2.3 - 2.5) of delimiting movement gates and/or movement spaces are provided.

14. Gear shifting apparatus according to the preceding claim 13, **characterized in that** the means (2.3 - 2.5) of delimiting movement gates and/or movement spaces are fastened at least partially to the housing (2).

15. Gear shifting apparatus according to one of the preceding claims 13 to 14, **characterized in that** the means (2.3 - 2.5) of delimiting movement gates and/or movement spaces are fastened at least partially to the inner bridge (4).

16. Gear shifting apparatus according to one of the preceding claims 13 to 15, **characterized in that** the means (2.3 - 2.5) of delimiting movement gates and/or movement spaces are fastened at least partially to the outer bridge (5).

17. Gear shifting apparatus according to one of the preceding claims 1 to 16, **characterized in that** the gear shifting apparatus (1) has three juxtaposed movement spaces (I, II, III), which are preferably aligned substantially parallel to one another, and in each case two adjacent movement spaces (I, II; II, III) are provided for different functions.

18. Gear shifting apparatus according to the preceding claim 17, **characterized in that** the inner movement space (II) is provided for the automatic shift gate and the two outer movement spaces (I, III) are provided for at least one sequential shift gate.

19. Gear shifting apparatus according to one of the preceding claims 1 to 18, **characterized in that** the automatic shift gate and the at least one sequential shift gate are formed, in terms of their width and optionally length, by a movement gate for the selector lever (3).

20. Gear shifting apparatus according to the preceding claim 19, **characterized in that** the movement gate comprises a single automatic shift gate and a single sequential shift gate, wherein between automatic shift gate and sequential shift gate a connecting gate is provided as a selection gate.

21. Gear shifting apparatus according to one of the preceding claims 1 to 20, **characterized in that** the first and the second shift axis (7, 8) are disposed eccentrically relative to one another.

22. Gear shifting apparatus according to one of the preceding claims 1 to 21, **characterized in that** the first and the second shift axis (7, 8) are disposed parallel to one another.

23. Gear shifting apparatus according to one of the preceding claims 1 to 22, **characterized in that** the distances of the first and of the second shift axis (7, 8) from a gear lever knob on the end of the selector lever (3) differ substantially.

24. Gear shifting apparatus according to one of the preceding claims 1 to 23, **characterized in that** for transmitting the shift movement of the selector lever (3) to the motor vehicle transmission in at least one gate a control cable is provided.

25. Gear shifting apparatus according to one of the preceding claims 1 to 24, **characterized in that** for transmitting the shift movement of the selector lever (3) to the motor vehicle transmission in at least one gate a linkage is provided.

26. Gear shifting apparatus according to one of the preceding claims 1 to 25, **characterized in that** for transmitting the shift movement of the selector lever (3) to the motor vehicle transmission in at least one shift gate, preferably the sequential shift gate, an electronic transmission device is provided.

27. Gear shifting apparatus according to one of the preceding claims 1 to 26, **characterized in that** it has a "key lock" system (10).

28. Gear shifting apparatus according to one of the preceding claims 1 to 27, **characterized in that** it has a "shift lock" system (14).

## Revendications

1. Dispositif de commutation d'une boîte de vitesse automatique comportant un levier de sélection (3) et une unité cinématique (4-9) pour transmettre les déplacements de sélection à une boîte de vitesses automatique, le levier de sélection (3) pouvant être déplacé dans une voie de commutation automatique (AG) pour la sélection d'étages de la boîte de vitesses automatique, autour d'un premier axe de commutation (7) et dans une voie de commutation à séquence (SG1, SG2) pour la commutation manuelle dans le sens croissant et dans le sens décroissant d'étages de la boîte de vitesses autour d'un second axe de commutation (8),
**caractérisé en ce qu'**il est prévu un support central (6), qui peut pivoter autour d'un axe de sélection (9), un étrier intérieur (4) qui est monté pivotant sur le support central (6) et qui peut basculer autour du premier axe de commutation (7) disposé essentiellement perpendiculaire à l'axe de sélection (9), et un étrier extérieur (5) est monté sur l'étrier intérieur (4) dans la voie de commutation à séquence,qui peut pivoter autour du second axe de commutation (8), et qui est relié au levier de sélection (3), et que des moyens pour sélectionner les axes de commutation au moyen d'un mouvement de pivotement du levier de sélection (3) sont fixés directement ou indirectement sur le support central (6).

2. Dispositif de commutation selon la revendication précédente 1, **caractérisé en ce que** les moyens pour sélectionner les axes de commutation permettent, dans le cas du choix de la voie automatique, un mouvement de pivotement du levier de sélection (3) autour du premier axe de commutation, l'axe de commutation automatique (7) et, dans le cas du choix de la voie de commutation à séquence, permettent un mouvement de pivotement du levier de sélection (3) autour du second axe de commutation, l'axe de commutation à séquence (8).

3. Dispositif de commutation selon l'une des revendications précédentes 1 et 2, **caractérisé en ce que** les moyens de sélection des axes de commutation possèdent des bras pivotants (17.1, 17.2) qui sont montés de manière à pouvoir pivoter sur un troisième axe de pivotement (18), disposé perpendiculairement à l'axe de sélection (9) et en étant décalés par rapport au premier axe de commutation (7).

4. Dispositif de commutation selon l'une des revendications précédentes 1 à 3, **caractérisé en ce que** les moyens de sélection des axes de commutation, notamment les bras pivotants (17.1, 17.2) possèdent chacun au moins un système d'engagement (2.1, 2.2) pour élément de blocage, dans lequel peut s'engager respectivement un élément de blocage (12.1, 12.2) de l'étrier extérieur (5) en fonction de la position du levier de sélection (3).

5. Dispositif de commutation selon l'une des revendications précédentes 1 à 4, **caractérisé en ce que** les moyens de sélection des axes de commutation, notamment les bras de pivotement (17.1, 17.2) comportent des paliers respectifs (22), qui sont disposés d'une manière excentrée par rapport à l'axe de pivotement (18).

6. Dispositif de commutation selon la revendication précédente 5, **caractérisé en ce que** la distance entre un palier respectif (22) et l'axe de pivotement (18) est égal ou inférieure à la distance entre le palier (22) et le système d'engagement (2.1, 2.2) de l'élément de blocage.

7. Dispositif de commutation selon la revendication précédente 6, **caractérisé en ce que** chaque palier respectif (22) est un palier libre comportant deux degrés de liberté.

8. Dispositif de commutation selon l'une des revendications précédentes 6 et 7, **caractérisé en ce que** chaque palier (22) comporte un évidement (19.1, 19.2) formé dans le bras pivotant (17.1, 17.2) et un tourillon fixe (20.1, 20.2), qui s'engage dans l'évidement (19.1, 19.2) et est relié de préférence à un boîtier de commutation.

9. Dispositif de commutation selon la revendication précédente 8, **caractérisé en ce que** les axes longitudinaux (21.1, 21.2) des tourillons (20.1, 20.2) sont disposés coaxialement dans une position du levier de sélection (3) dans la voie de commutation automatique.

10. Dispositif de commutation selon l'une des revendications précédentes 1 à 9, **caractérisé en ce que** le troisième axe (18) recoupe l'axe de sélection (9).

11. Dispositif de commutation selon l'une des revendications précédentes 1 à 10, **caractérisé en ce que** le premier axe de commutation (7) passe par au moins un élément de blocage (12.1, 12.2).

12. Dispositif de commutation selon l'une des revendications précédentes 1 à 11, **caractérisé en ce que** le au moins un élément de blocage (12.1, 12.2) et le au moins un système d'engagement (2.1, 2.2) établissent, dans le cas d'un engagement réciproque, une liaison bloquée en rotation entre l'étrier intérieur (4) et l'étrier extérieur (5).

13. Dispositif de commutation selon l'une des revendications précédentes 1 à 12, **caractérisé en ce que** des moyens (2.3-2.5) sont prévus pour limiter des voies de déplacement et/ou des espaces de déplacement.

14. Dispositif de commutation selon la revendication précédente 13, **caractérisé en ce que** les moyens (2.3-2.5) servant à limiter des voies de déplacement et/ou des espaces de déplacement sont fixés au moins en partie sur le boîtier (2).

15. Dispositif de commutation selon l'une des revendications précédentes 13 et 14, **caractérisé en ce que** les moyens (2.3-2.5) servant à limiter des voies de déplacement et/ou des espaces de déplacement sont fixés au moins partiellement à l'étrier intérieur (4).

16. Dispositif de commutation selon l'une des revendications précédentes 13 à 15, **caractérisé en ce que** les moyens (2.3-2.5) pour limiter des voies de déplacement et/ou des espaces de déplacement sont fixés au moins partiellement sur l'étrier extérieur (5).

17. Dispositif de commutation selon l'une des revendications précédentes 1 à 16, **caractérisé en ce que** le dispositif de commutation (1) comporte trois espaces de déplacement (I, II, III) disposés côte-à-côte et orientés de préférence en étant essentiellement parallèles entre eux, et que deux espaces voisins respectifs de déplacement (I, II; II, III) sont prévus pour des fonctions différentes.

18. Dispositif de commutation selon la revendication précédentes 17, **caractérisé en ce que** l'espace intérieur de déplacement (II) est prévu pour la voie de commutation automatique et que les deux espaces extérieurs de déplacement (I, III) sont prévus pour au moins une voie de commutation à séquence.

19. Dispositif de commutation selon l'une des revendications précédentes 1 à 18, **caractérisé en ce que** la voie de commutation automatique et la au moins une voie de commutation à séquence sont formées, dans sa largeur et éventuellement dans sa longueur, par une coulisse de déplacement pour le levier de sélection (3).

20. Dispositif de commutation selon la revendication précédente 19, **caractérisé en ce que** la coulisse de déplacement comporte une seule voie de commutation automatique et une seule voie de commutation à séquence, une voie de liaison étant prévue en tant que voie de sélection entre la voie de commutation automatique et la voie de commutation à séquence.

21. Dispositif de commutation selon l'une des revendications précédentes 1 à 20, **caractérisé en ce que** les premier et second axes de commutation (7, 8) sont disposés d'une manière excentrée l'un par rapport à l'autre.

22. Dispositif de commutation selon l'une des revendications précédentes 1 à 21, **caractérisé en ce que** les premier et second axes de commutation (7, 8) sont disposés de manière à être parallèles entre eux.

23. Dispositif de commutation selon l'une des revendications précédentes 1 à 22, **caractérisé en ce que** les distances entre les premier et second axes de commutation (7,8) diffèrent par rapport à un bouton de commutation à l'extérieur du levier de sélection (3) sont nettement différentes.

24. Dispositif de commutation selon l'une des revendications précédentes 1 à 23, **caractérisé en ce que** pour la transmission du déplacement de commutation du levier de sélection à la boîte de vitesses du véhicule automobile, un câble de traction est prévu dans au moins une voie.

25. Dispositif de commutation selon l'une des revendications précédentes 1 à 24, **caractérisé en ce que** pour la transmission du déplacement de commutation du levier de sélection (3) à la boîte de vitesses du véhicule automobile, un tringlerie est prévue dans au moins une voie.

26. Dispositif de commutation selon l'une des revendications précédentes 1 à 25, **caractérisé en ce que** pour la transmission du déplacement de commutation du levier de sélection (3) à la boîte de vitesses du véhicule automobile, un dispositif de transmission électronique est prévu dans au moins une voie de commutation, de préférence la voie de commutation à séquence.

27. Dispositif de commutation selon l'une des revendications précédentes 1 à 26, **caractérisé en ce qu'**il dispose d'un système "key lock" (10).

28. Dispositif de commutation selon l'une des revendications précédentes 1 à 27, **caractérisé en ce que** qu'il dispose d'un système "shift lock" (14).
